# EUROPÄISCHE PATENTSCHRIFT

(11) **EP 2 884 026 B1**
(45) Veröffentlichungstag und Bekanntmachung des Hinweises auf die Patenterteilung: **31.07.2019**
(21) Anmeldenummer: 14194001.5
(22) Anmeldetag: 20.11.2014
(51) Int. Cl.: E04H 12/08, E04B 1/38, F16L 23/02

(54) **Flanschverbindung einer Bauwerksstruktur als Offshore- oder Onshore-Struktur sowie Verfahren zur Errichtung einer Bauwerksstruktur unter Verwendung der Flanschverbindung**
Flange connection of a structure as offshore or onshore structure and method for erecting a structure using the flange connection
Bride de liaison d'une structure de construction offshore ou on-shore et procédé destiné à ériger une structure de construction à l'aide d'une bride de liaison

(30) Priorität: 12.12.2013 DE 102013020548; 17.02.2014 DE 102014001996
(43) Veröffentlichungstag der Anmeldung: 17.06.2015
(73) Patentinhaber: innogy SE, 45128 Essen (DE)
(72) Erfinder: Bartminn, Daniel, 25335 Elmshorn (DE); Otaibi, Walid Kh. A. Al, 34125 Kassel (DE); Freisen, Heinrich Josef Michael, 28209 Bremen (DE); Lüddecke, Falk, 06888 Mühlanger (DE); Wörden, Florian Tom, 27638 Wremen (DE)
(74) Vertreter: Richly & Ritschel Patentanwälte PartG mbB

(56) Entgegenhaltungen:
- DE-U1-202013 010 214
- GB-A- 2 223 077
- US-A1- 2013 180 199

## Beschreibung

Die Erfindung betrifft eine Flanschverbindung an einer Offshore-Struktur umfassend ein erstes unteres Anschlussprofil und ein mit dem ersten unteren Anschlussprofil verbundenes zweites oberes Anschlussprofil.

Die Erfindung betrifft weiterhin ein Verfahren zur Errichtung einer Bauwerksstruktur unter Verwendung einer Flanschverbindung gemäß der Erfindung.

Unter Anschlussprofil im Sinne der vorliegenden Erfindung sind insbesondere mit Bolzen gegeneinander verspannte Segmente bzw. Rohrschüsse eines Offshore- oder Onshore-Turmbauwerks zu verstehen. Es handelt sich dabei um Stahlrohrschüsse, die über Verbindungsflansche mit vorgespannten Bolzen oder Schrauben gegeneinander gesichert sind. Hierbei kann es sich beispielsweise um die einzelnen Rohrschüsse eines Turmbauwerks oder um einen Gründungspfahl mit einem Übergangsstück (Monopile/Transition Piece) eines Offshore-Bauwerks handeln. Ist als Turmbauwerk beispielsweise ein Turm mit einem Windkraftgenerator vorgesehen, kann die geflanschte Verbindung auch den Übergang zwischen dem Turmbauwerk und einer Gondel des Windkraftgenerators oder den Übergang zwischen anderen Rohrschüssen bilden.

Das Anschlussprofil sowie die Bauwerksstruktur ist nicht auf die Verwendung mit Offshore-Windkraftgeneratoren beschränkt, vielmehr können das Profil sowie die Struktur auch für Offshore-Bohr-oder Förderplattformen oder Onshore-Turmbauwerke geeignet und bestimmt sein.

Offshore-Bauwerke werden häufig auf gerammten oder vibrierten Stahlpfählen gegründet, wobei die Stahlpfähle als Anschlussprofile durch Flanschverbindungen mit aufgehenden Strukturteilen verbunden sind. Bekannte Offshore-Gründungsstrukturen sind beispielsweise sogenannte Monopiles, Tripiles oder Jackets.

Eine beispielsweise in der Nordsee häufig zu findende Gründungsstruktur umfasst sogenannte Monopiles mit daran befestigten Übergangsstücken (Transition Piece), die dann ein Turmbauwerk oder eine Plattform aufnehmen. Der Monopile als Anschlussprofil wird, wie vorstehend bereits erwähnt, entweder in den Meeresuntergrund gerammt oder vibriert. Häufig steht während der Planungsphase nicht fest, ob die Pfähle gerammt oder vibriert werden, je nach Beschaffenheit des Meeresuntergrundes kommt z. B. zunächst ein Einvibrieren des Pfahles in Betracht, später kann zusätzlich vorgesehen sein, den Pfahl mittels eines Rammbärs bzw. einer Pfahlramme durch Impulsrammen weiter in den Meeresuntergrund zu treiben. Auch die umgekehrte Vorgehensweise ist denkbar und möglich.

Bisher bekannte Pfahlkonstruktionen sind entweder zum Einvibrieren oder zum Impulsrammen ausgebildet. Üblicherweise sind die beim Einvibrieren von Pfählen verwendeten Klemmbacken in der Öffnungsweite limitiert, handelsübliche Klemmen sind nicht für das Übergreifen eines Verbindungsflansches konstruiert, da sie normalerweise an den freien Enden eines Rohres angreifen.

Grundsätzlich ist es daher wünschenswert, eine Flanschkonstruktion bereitzustellen, die sowohl gerammt als auch vibriert werden kann.

Bei bekannten Flanschkonstruktionen, die für das Impulsrammen ausgelegt sind, werden naturgemäß durch das Impulsrammen verhältnismäßig hohe Kräfte in den Flansch und in den Flansch-Wandanschluss des durchgehenden Profilquerschnitts des Anschlussprofils eingeleitet. Hier kann es zu lokalen plastischen Verformungen des Materials kommen, was im Sinne der Dichtigkeit der später hergestellten permanenten Flanschverbindung nicht vorteilhaft ist.

Ein Anschlussprofil für ein Turmbauwerk ist beispielsweise aus der GB 2 223 007 A bekannt.

Anschlussprofile für Turmbauwerke sind beispielsweise auch aus der US 2013/0180199 A1 und der DE 20 2013 010 214 U1 bekannt.

Der Erfindung liegt die Aufgabe zugrunde, einer Flanschverbindung bereitzustellen, welche den unterschiedlichen Anforderungen gerecht wird, die sich aus unterschiedlichen Einbringungsverfahren ergeben.

Der Erfindung liegt weiterhin die Aufgabe zugrunde, eine Flanschverbindung bereitzustellen, das hinsichtlich der mechanischen Beanspruchbarkeit beim Impulsrammen verbessert ist.

Insbesondere Offshore-Strukturen der vorstehend genannten Art erfordern weiterhin eine konstruktive Abdichtung gegen Wellenschlag oder stehenden Wasserdruck, was bei der herkömmlichen Ausbildung von Anschlussprofilen konstruktiv schwierig ist.

Der Erfindung liegt daher ebenfalls die Aufgabe zugrunde, eine Flanschverbindung bereitzustellen, die auf den konstruktiven Anforderungen einer Abdichtung gegen Wellenschlag oder stehenden Wasserdruck gerecht werden.

Die Aufgabe wird zunächst gelöst durch die Merkmale des Anspruchs 1.

Vorteilhafte Ausgestaltungen der Erfindung ergeben sich aus den Unteransprüchen.

Die Aufgabe wird schließlich gelöst durch ein Verfahren zur Errichtung einer Bauwerksstruktur mit den Merkmalen des Anspruchs 10.

Die Erfindung umfasst ein Anschlussprofil einer Bauwerksstruktur als Offshore- oder Onshore-Struktur mit einem vorzugsweise zylindrischen, durchgängigen Profilquerschnitt und mit wenigstens einem endseitig angeordneten umlaufenden Flansch, wobei der Flansch einen Flanschkörper mit einer Stützfläche zur Abstützung einer Gegenfläche eines komplementär ausgebildeten Anschlussprofils aufweist und die Stützfläche von mit Abstand zueinander vorzugsweise auf einem Kreisbogen angeordneten Durchgriffsöffnungen für Befestigungsmittel durchsetzt ist und sich der Flanschkörper im Wesentlichen rechtwinkelig zur Längsachse des durchgehenden Profilquerschnitts erstreckt, wobei der Flanschkörper beiderseits der Wand des durchgängigen Profilquerschnitts auskragend ausgebildet ist.

Durch diese konstruktive Ausgestaltung des Flanschkörpers gemäß der Erfindung kann der Flanschkörper verglichen zu einem üblichen Standard-Flansch zusätzlich Stützfläche aufweisen, an welcher Mittel zum Anschlagen von Klemmbacken einer Vibrationseinrichtung vorgesehen sein können. Durch den beiderseits der Wand des durchgängigen Profilquerschnitts auskragend ausgebildeten Flanschkörper kann der Flanschkörper bezüglich der Wand des durchgängigen Profilquerschnitts so angeordnet sein, dass die beim Impulsrammen induzierte Biegemomente im Bereich des Anschlusses des Flanschkörpers an die Wand des durchgängigen Profilquerschnitts verringert werden.

Dies kann insbesondere dadurch erreicht werden, dass mit der Trägheitsmasse des Teils des Flanschkörpers, der zur einen Seite auskragt die Trägheitsmasse des zu der anderen Seite der Wand des Profilquerschnitts auskragenden Teils des Flanschkörpers zumindest zum Teil kompensiert wird. Beispielsweise kann ein nach außen auskragender Teil des Flanschkörpers die Trägheitsmasse des nach innen auskragenden Teils des Flanschkörpers teilweise kompensieren, sodass die Trägheitsmassen zumindest teilweise ausgeglichen sind und die durch das Impulsrammen induzierten Schwingungen verringert werden. Hierdurch werden Materialermüdungen aufgrund der in die Wand des durchgängigen Profilquerschnitts eingeleiteten Biegemomente beim Impulsrammen vermieden oder verringert.

Die Anschlussprofile im Sinne der Erfindung können beispielsweise als Rohrsektionen oder Rohrschüsse ausgebildet sein, bei denen ein innen umlaufender Flanschkörper mit innen angeordneten Durchgriffsöffnungen versehen ist.

Die Begriffe "unten" und "oben" im Sinne der vorliegenden Erfindung beziehen sich grundsätzlich auf die Einbaulage der Anschlussprofile.

Bei dem Anschlussprofil der Flanschverbindung gemäß der Erfindung ist vorgesehen, dass der Flanschkörper relativ zu der Wand des durchgängigen Profilquerschnitts unsymmetrisch ausgebildet ist. Dabei ist vorgesehen, dass der nach innen auskragende Teil des Flanschkörpers weiter auskragend ausgebildet ist als der nach außen auskragende Teil des Flanschkörpers. Da der nach innen (zur Profilinnenseite) weisende Teil des Flanschkörpers von auf einem gemeinsamen Lochkreis angeordneten Durchgriffsöffnungen durchsetzt ist, können die Trägheitsmasse des nach innen auskragenden Teils des Flanschkörpers und des nach außen auskragenden Teils des Flanschkörpers auch bei einer unsymmetrischen Geometrie ausgeglichen sein.

Der nach außen auskragende Teil des Flanschkörpers kann beispielsweise im Bereich eines umlaufenden Randes der von dem Flanschkörper gebildeten Stützfläche mit einer Fase oder einer abgeschrägten Befestigungsfläche zur Aufnahme einer Schürze ausgebildet sein.

Durch die besondere Geometrie des Flanschkörpers des Anschlussprofils gemäß der Erfindung ist es zunächst möglich, das Anschlussprofil durch Impulsrammen in den Untergrund einzutreiben. Die Geometrie des Flanschkörpers erlaubt es allerdings, an diesem im Bereich der abgeschrägten Befestigungsfläche bzw. umlaufenden Fase eine die Stützfläche randseitig einfassende Schürze anzuschweißen. Die Schürze ermöglicht in vorteilhafter Art und Weise das Anschlagen von beim Einvibrieren verwendeten handelsüblichen Klemmen bzw. Klemmbacken einer Vibrationseinrichtung.

Bei einer zweckmäßigen Variante des Anschlussprofils gemäß der Erfindung ist vorgesehen, dass der Flansch eine die Stützfläche randseitig umfassende Schürze aufweist, die in Richtung auf das komplementäre Anschlussprofil vorsteht.

Bei einer weiterhin vorteilhaften Ausgestaltung des Anschlussprofils gemäß der Erfindung ist vorgesehen, dass die Stützfläche des Flanschkörper profiliert ist. Die Stützfläche kann mit einer Erhöhung oder einer Vertiefung versehen sein, die die beim Impulsrammen in die Stützfläche eingeleiteten Rammkräfte aufnimmt, so dass die Rammkräfte symmetrisch in die Wand des durchgängigen Profilquerschnitts eingeleitet werden können.

Beispielsweise kann in der Stützfläche wenigstens eine umlaufende Vertiefung oder Nut zum Eingriff einer Pfahlramme vorgesehen sein. Diese umlaufende Nut kann beispielsweise ein Teil der Rammhaube oder eines Zwischenstücks aufnehmen.

Vorzugsweise ist die umlaufende Vertiefung in der Stützfläche oberhalb, d. h. in der Projektion der Wand des durchgängigen Profilquerschnitts angeordnet.

Diese Nut kann bei Herstellung der Flanschverbindung mit einem komplementären Anschlussprofil zur Aufnahme eines Dichtmittels, beispielsweise eines O-Rings oder einer elastomeren Dichtschnur ausgebildet sein. Der O-Ring kann aber auch schon vor der Rammung eingelegt worden sein. Weist der O-Ring selbst Vertiefungen auf, so kann durch Verdrängen der eingeschlossenen Luft beim ersten Rammimpuls ein Vakuum erzeugt werden, welches ein Hochspringen des Zwischenstücks oder der Rammhaube verhindert.

Die Schürze ist zweckmäßigerweise mit einem nach außen auskragenden Teil des Flanschkörpers, vorzugsweise einstückig, mit dem Flanschkörper verbunden und die Durchgriffsöffnungen durchsetzen einen nach innen auskragenden Teil des Flanschkörpers.

Die Erfindung umfasst eine Flanschverbindung an einer Bauwerksstruktur als Offshore- oder Onshore-Struktur umfassend ein erstes unteres Anschlussprofil und ein mit dem ersten unteren Anschlussprofil verbundenes zweites oberes Anschlussprofil, die sich jeweils über eine Stützfläche eines Flanschkörpers gegeneinander abstützen, wobei die Flanschkörper jeweils zueinander ausgerichtete Durchgriffsöffnungen aufweisen und die Durchgriffsöffnungen der Flanschkörper von Bolzen, Gewindebolzen oder Schrauben oder dergleichen durchsetzt sind, wobei das erste untere Anschlussprofil als Anschlussprofil mit einem der vorstehend beschriebenen Merkmale ausgebildet ist.

Bei einer vorstehend beschriebenen Flanschverbindung mit einer Schürze ist es zweckmäßig, wenn die Schürze eine Stoßfuge zwischen einer Stützfläche des zweiten oberen Anschlussprofils und der Stützfläche des ersten unteren Anschlussprofils umfänglich abdeckt und mit dem zweiten unteren Abschlussprofil einen Ringraum bildet. Der Ringraum kann beispielsweise mittels einer Dichtmanschette von außen abgedeckt sein.

Die Dichtmanschette kann beispielsweise aus einem thermoplastischem Kunststoff oder einem gummielastischen Material, beispielsweise einem thermoplastischen Elastomer bestehen. Die Dichtmanschette kann ein vorzugsweise flexibles Formstück umfassen, welches den Ringraum wenigstens teilweise ausfüllt.

Zusätzlich kann der Ringraum mit Mitteln zur Drainage, beispielsweise in Form von Drainagebohrungen durch die Schürze an die Umgebung angeschlossen sein.

Der Ringraum kann bei einer Variante der Flanschverbindung ein flexibles Formstück oder ein flexibles Dichtelement aufnehmen. Alternativ können mehrere segmentförmig ausgebildete flexible Formstücke in den Ringraum eingesetzt sein.

Das Verfahren zur Gründung eines Bauwerks gemäß der Erfindung sieht die Verwendung wenigstens eines Anschlussprofils mit einem oder mehreren vorstehend beschriebenen Merkmalen vor. Bei dem Verfahren gemäß der Erfindung ist vorgesehen, dass das Anschlussprofil in den Untergrund eingerammt und/oder einvibriert wird. Das Verfahren kann zunächst das Einrammen und dann das Einvibrieren, nur das Einrammen oder zunächst das Einvibrieren und dann ein Einrammen umfassen.

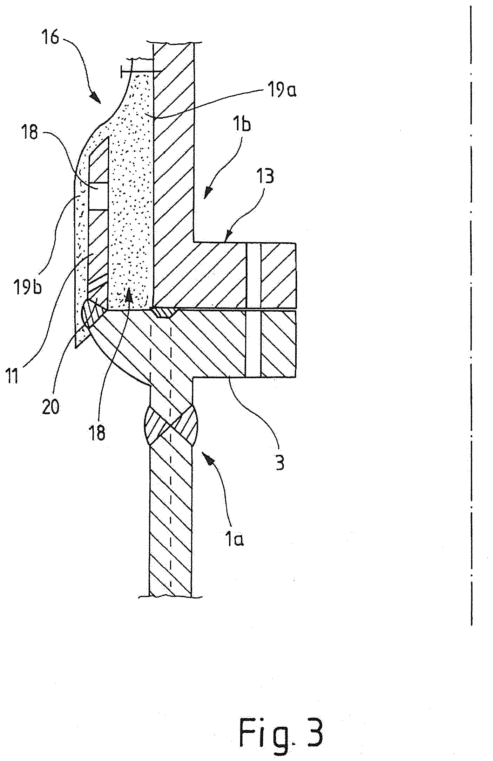

Das Einvibrieren erfolgt zweckmäßigerweise an einem mit Schürze versehenen Anschlussprofil, wie es beispielsweise in der Figur 3 dargestellt ist. Die Schürze erlaubt das Anschlagen handelsüblicher Klemmbacken einer Vibrationseinrichtung.

Die Erfindung betrifft weiterhin ein Verfahren zur Errichtung einer Bauwerksstruktur, beispielsweise eines Onshore- oder Offshore-Turmbauwerks, unter Verwendung eines Anschlussprofils mit einem der Merkmale wie vorstehend beschrieben, wobei das Verfahren vorzugsweise in einem ersten Schritt das Einvibrieren wenigstens eines Anschlussprofils in den Bauwerksuntergrund bis zu einer ersten Eindringtiefe, in einem zweiten Schritt das Rammen des selben Anschlussprofils unmittelbar oder über wenigstens ein angeflanschtes weiteres Anschlussprofil mittelbar in den Bauwerksgrund sowie das Komplettieren der Bauwerksstruktur mit weiteren Anschlussprofilen oder mit weiteren Strukturbauteilen umfasst.

In einer besonders vorteilhaften Variante des Verfahrens gemäß der Erfindung ist insbesondere unter Verwendung eines Anschlussprofils, bei welchem in der Stützfläche wenigstens eine umlaufende Vertiefung zum Eingriff einer Pfahlramme angeordnet ist, vorgesehen, dass in die umlaufende Vertiefung der Stützfläche vor dem Rammen ein elastisches Dichtmittel eingebracht wird, beispielsweise in Form eines O-Rings mit einer profilierten Oberfläche. Weist der O-Ring selbst Vertiefungen auf, so kann durch das Verdrängen der eingeschlossenen Luft beim ersten in die Stützfläche eingeleiteten Rammimpuls ein Vakuum erzeugt werden, welches ein Hochspringen eines Zwischenstücks oder der Rammhaube selber verhindert.

Die Erfindung wird nachstehend anhand eines in den Zeichnungen dargestellten Ausführungsbeispiels erläutert.

Es zeigen:
- Figur 1: eine Schnittansicht durch einen Teil eines Anschlussprofils gemäß dem Stand der Technik,

- Figur 2: eine Schnittansicht durch eine Flanschverbindung gemäß der Erfindung mit einem Anschlussprofil gemäß Figur 1 und
- Figur 3: eine Schnittansicht durch eine Flanschverbindung mit einem Anschlussprofil gemäß einer zweiten Variante der Erfindung.

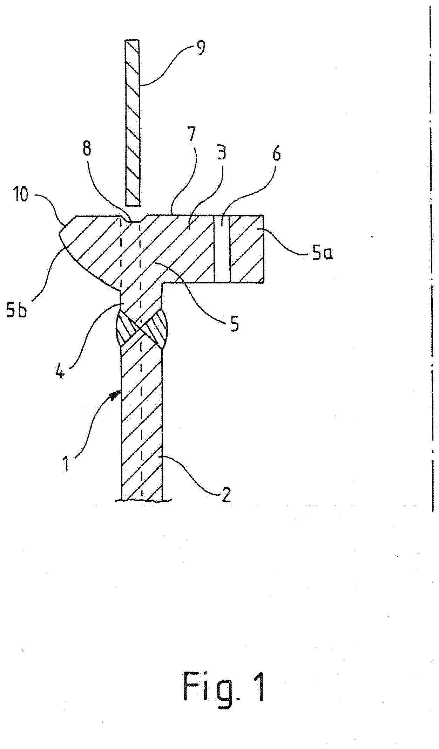

Es wird zunächst Bezug genommen auf Figur 1, die einen Teil eines Anschlussprofils 1 gemäß der Erfindung zeigt. Das Anschlussprofil 1 ist als rotationssymmetrisches Rohrprofil ausgebildet und kann beispielsweise als sogenannter Monopile einer Offshore-Windkraftanlage ausgebildet sein, der ein entsprechend ausgebildetes Anschlussprofil in Form eines Übergangsstücks (Transition Piece) oder in Form einer Rohrsektion eines Turmbauwerks aufnimmt.

In der Zeichnung ist nur ein Teil des Anschlussprofils 1 im Schnitt dargestellt, der spiegelsymmetrische Teil des Anschlussprofils 1 ist aus Vereinfachungsgründen nicht dargestellt.

Das Anschlussprofil 1 umfasst einen im Wesentlichen durchgängigen Profilquerschnitt, der vorzugsweise zylindrisch ist. Gezeigt ist eine Wand 2 des durchgängigen Profilquerschnitts, an die ein Ringflansch 3 angeschweißt ist. Der Ringflansch 3 umfasst einen Wandabschnitt 4 sowie einen Flanschkörper 5. Der Wandabschnitt 4 des Ringflansches 3 ist stoßseitig und fluchtend mit der Wand 2 des durchgängigen Querschnittsprofils verschweißt.

Der Flanschkörper 5 umfasst einen nach innen auskragenden Teil 5a sowie einen nach außen auskragenden Teil 5b. Die Begriffe "innen" und "außen" im Sinne der vorstehenden Definition bezeichnen jeweils bezogen auf den rohrförmigen Querschnitt des Anschlussprofils 1 die von dem Anschlussprofil 1 umschlossene Innenseite sowie die entsprechend angewandte Seite. "Innen" bedeutet also im Sinne der Erfindung "von dem Profilquerschnitt umschlossen".

Der nach innen auskragende Teil 5a des Flanschkörpers ist mit Durchgriffsöffnungen 6 versehen, die vorzugsweise als kreisrunde Bohrungen auf einem gemeinsamen Lochkreis angeordnet sind.

Der Flanschkörper 5 bildet eine Stützfläche 7, die eine in der Projektion oberhalb der Wand 2 des durchgängigen Profilquerschnitts vorgesehene Ringnut aufweist. Die Ringnut kann einen nur andeutungsweise dargestellten Teil einer Rammhaube 9 zumindest vorübergehend aufnehmen.

Der äußere umlaufende Rand der Stützfläche 7 ist mit einer Phase bzw. Schrägfläche 10 versehen, an welcher beispielsweise eine Schürze 11 (siehe Figur 3) anschweißbar ist.

Die Stützfläche 7 kann insgesamt nach innen, d. h. in Richtung auf die Symmetrieachse des Anschlussprofils 1 leicht abschüssig bzw. leicht geneigt ausgebildet sein.

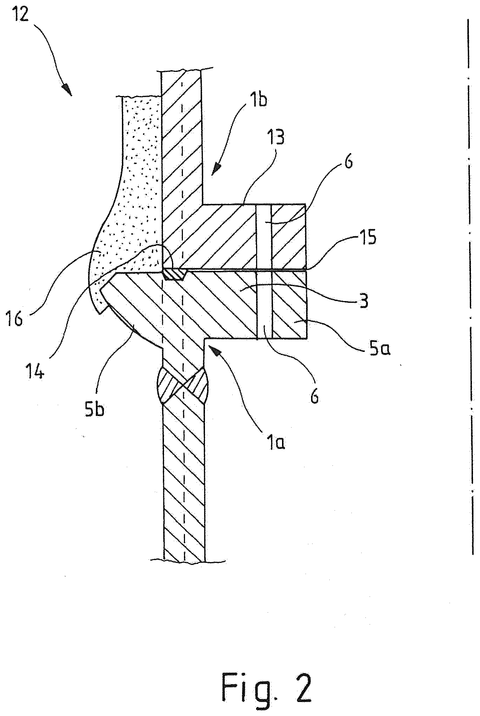

Figur 2 zeigt eine Flanschverbindung 12 unter Verwendung eines Anschlussprofils 1 gemäß der Erfindung. Die Flanschverbindung 12 umfasst ein erstes unteres Anschlussprofil 1a sowie ein zweites oberes Anschlussprofil 1b. Das erste untere Anschlussprofil 1a ist als Anschlussprofil 1 gemäß Figur 1 ausgebildet, wohingegen das zweite obere Anschlussprofil 1b als Anschlussprofil mit einem innen umlaufenden Ringflansch 13 ausgebildet ist, der als normaler Ringflansch mit L-Profil gestaltet ist. Das erste untere Anschlussprofil 1a und das zweite obere Anschlussprofil 1b sind so aneinander angeschlossen, dass die Durchgriffsöffnungen 6 der einander zugekehrten Stützflächen 7 der Ringflansche 3, 13 zueinander fluchtend angeordnet sind. Von diesen aufgenommene Befestigungsmittel, beispielsweise als Gewindebolzen, Gewindeschrauben oder dergleichen sind nicht dargestellt.

Bei der in Figur 2 dargestellten Flanschverbindung 12 nimmt die Ringnut 8 des ersten unteren Anschlussprofils 1a eine Dichtschnur 14 auf, die eine Stoßfuge 15 zwischen den Stützflächen 7 abdichtet.

Die Flanschverbindung 12 ist nach außen im Bereich der Stoßfuge 15 mit einer Dichtmanschette 16 abgedeckt, die der Geometrie des Flanschkörpers 5 bzw. des nach außen auskragenden Teils 5b des Flanschkörpers 5 angepasst ist und die beispielsweise an dem zweiten oberen Anschlussprofil befestigt ist. Diese kann dort formschlüssig, kraftschlüssig und/oder stoffschlüssig befestigt sein. Die Dichtmanschette 16 kann als umlaufende Elastomerdichtung oder als umlaufender Kunststoffkragen ausgebildet sein.

Eine weitere Variante der Flanschverbindung 12 gemäß der Erfindung ist in Figur 3 dargestellt, wobei in Figur 3 gleiche Bauteile mit gleichen Bezugszeichen wie in den Figuren 1 und 2 bezeichnet sind.

Das erste untere Anschlussprofil 1a bei der in Figur 3 dargestellten Variante der Flanschverbindung 12 ist im Wesentlichen entsprechend dem Anschlussprofil 1 gemäß Figur 1 ausgebildet, wobei dort eine den Ringflansch 3 des ersten unteren Anschlussprofils 1a randseitig einfassende Schürze 11 vorgesehen ist, die nachträglich an die Schrägfläche 10 des ersten unteren Anschlussprofils 1a angeschweißt wurde.

Die Anschlussprofile 1, 1a, 1b gemäß der Erfindung sind vorzugsweise als Stahlprofile ausgebildet, die Schürze 17 kann ebenfalls als Stahlprofil ausgebildet sein. Im Übrigen entspricht die Gestaltung des ersten unteren Anschlussprofils 1a gemäß Figur 3 der Gestaltung des ersten unteren Anschlussprofils 1a in Figur 2.

Die Schürze 17 ist mit einem oder mehreren Durchbrüchen 17 versehen, die beispielsweise die Handhabung mittels Lasthaken oder Schäkeln oder dergleichen ermöglichen.

Die Flanschverbindung ist mit einer Dichtmanschette 16 abgedichtet, die einen ersten, einen Ringraum 18 zwischen der Schürze 11 und dem zweiten oberen Anschlussprofil 1b ausfüllenden Schenkel 19a umfasst. Ein zweiter Schenkel 19b der Dichtmanschette 16 übergreift die Schürze 11 außenseitig.

Die Schürze 17 ist darüber hinaus noch mit einer Drainagebohrung 20 versehen, die eine etwa erforderliche Entwässerung des Ringraums 18 erlaubt.

Um bei Temperaturen unterhalb des Gefrierpunktes sicherzustellen, dass der Eisdruck in dem Ringraum 18 nicht all zu hoch wird, kann vorgesehen sein, die Stützfläche 7 des Ringflansches 3 in den außen auskragenden Teil 5b des Flanschkörpers entweder bombiert oder konkav auszubilden.

### Bezugszeichenliste

- 1: Anschlussprofil
- 1a: erstes unteres Anschlussprofil
- 1b: zweites oberes Anschlussprofil
- 2: Wand
- 3: Ringflansch
- 4: Wandabschnitt
- 5: Flanschkörper
- 5a: innen auskragender Teil des Flanschkörpers
- 5b: außen auskragender Teil des Flanschkörpers
- 6: Durchgriffsöffnungen
- 7: Stützfläche
- 8: Ringnut
- 9: Rammhaube
- 10: Schrägfläche
- 11: Schürze
- 12: Flanschverbindung
- 13: Ringflansch als L-Profil
- 14: Dichtschnur
- 15: Stoßfuge
- 16: Dichtmanschette
- 17: Durchbruch
- 19: Ringraum
- 19a: erster Schenkel der Dichtmanschette
- 19b: zweiter Schenkel der Dichtmanschette
- 20: Drainagebohrung

## Patentansprüche

1. Flanschverbindung an einer Bauwerksstruktur als Offshore- oder Onshore-Struktur umfassend ein erstes unteres Anschlussprofil (1a) und ein mit dem ersten unteren Anschlussprofil (1a) verbundenes zweites oberes Anschlussprofil (1b), wobei das erste untere Anschlussprofil (1a) mit einem zylindrischen, durchgängigen Profilquerschnitt und mit wenigstens einem endseitig angeordneten umlaufenden Flansch, wobei der Flansch einen Flanschkörper (5, 5a, 5b) mit einer Stützfläche (7) zur Abstützung einer Gegenfläche eines komplementär ausgebildeten Anschlussprofils (1b) aufweist und die Stützfläche (7) von mit Abstand zueinander auf einem Kreisbogen angeordneten Durchgriffsöffnungen (6) für Befestigungsmittel durchsetzt ist und sich der Flanschkörper (5) im Wesentlichen rechtwinkelig zur Längsachse des durchgehenden Profilquerschnitts erstreckt, wobei der Flanschkörper (5, 5a, 5b) beiderseits der Wand (2) des durchgängigen Profilquerschnitts auskragend ausgebildet ist, wobei ein nach innen auskragender Teil des Flanschkörpers weiter auskragend ausgebildet ist als ein nach außen auskragender Teil des Flanschkörpers und wobei der nach innen weisende Teil des Flanschkörpers von den auf einem gemeinsamen Lochkreis angeordneten Durchgriffsöffnungen (6) durchsetzt ist, **dadurch gekennzeichnet, dass** das zweite obere Anschlussprofil (1b) als Anschlussprofil mit einem innen umlaufenden Ringflansch 13 ausgebildet ist, der als normaler Ringflansch mit L-Profil gestaltet ist.

2. Flanschverbindung nach Anspruch 1 **dadurch gekennzeichnet, dass** der Flansch eine die Stützfläche (7) randseitig einfassende Schürze (11) aufweist, die in Richtung auf das komplementäre Anschlussprofil (1b) vorsteht.

3. Flanschverbindung nach einem der Ansprüche 1 oder 2 **dadurch gekennzeichnet, dass** die Stützfläche (7) profiliert ist.

4. Flanschverbindung nach einem der Ansprüche 1 bis 3, **dadurch gekennzeichnet, dass** in der Stützfläche (7) wenigstens eine umlaufende Vertiefung zum Eingriff einer Pfahlramme vorgesehen ist.

5. Flanschverbindung nach einem der Ansprüche 2 bis 4, **dadurch gekennzeichnet, dass** die Schürze (11) mit einem nach außen auskragenden Teil (5b) des Flanschkörpers (5) einstückig mit dem Flanschkörper (5) verbunden ist und dass die Durchgriffsöffnungen (6) einen nach innen auskragenden Teil (5a) des Flanschkörpers (5) durchsetzen.

6. Flanschverbindung nach Anspruch 5, **dadurch gekennzeichnet, dass** die Schürze (11) eine Stoßfuge (15) zwischen einer Stützfläche (7) des zweiten oberen Anschlussprofils (1b) und der Stützfläche des ersten unteren Anschlussprofils (1a) umfänglich abdeckt und mit dem zweiten oberen Anschlussprofil (1b) einen Ringraum (18) bildet.

7. Flanschverbindung nach Anspruch 6, **dadurch gekennzeichnet, dass** der Ringraum (18) mittels einer Dichtmanschette (16) von außen abgedeckt ist.

8. Flanschverbindung nach Anspruch 7, **dadurch gekennzeichnet, dass** die Dichtmanschette (16) wenigstens ein vorzugsweise flexibles Formstück umfasst, welches den Ringraum (18) wenigstens teilweise ausfüllt.

9. Flanschverbindung nach Anspruch 7, **dadurch gekennzeichnet, dass** der Ringraum (18) wenigstens ein flexibles Formstück oder flexibles Dichtelement aufnimmt.

10. Verfahren zur Errichtung einer Bauwerksstruktur unter Verwendung einer Flanschverbindung nach einem der Ansprüche 1 bis 9 **dadurch gekennzeichnet, dass** das erste untere Anschlussprofil (1a) in den Bauwerksuntergrund eingerammt und /oder einvibriert wird.

11. Verfahren nach Anspruch 10 umfassend in einem ersten Schritt das Einvibrieren wenigstens des ersten unteren Anschlussprofils (1a) in den Bauwerksuntergrund bis zu einer ersten Eindringtiefe, in einem zweiten Schritt das Rammen des selben Anschlussprofils unmittelbar oder über wenigstens ein angeflanschtes weiteres Anschlussprofil mittelbar in den Bauwerksuntergrund sowie das Komplettieren der Bauwerksstruktur mit weiteren Anschlussprofilen oder mit weiteren Strukturbauteilen.

12. Verfahren nach einem der Ansprüche 10 oder 11 unter Verwendung eines Anschlussprofils bei welchem in der Stützfläche (7) wenigstens eine umlaufende Vertiefung zum Eingriff einer Pfahlramme vorgesehen ist, **dadurch gekennzeichnet, dass** in die umlaufende Vertiefung der Stützfläche vor dem Rammen ein elastisches Dichtmittel eingebracht wird, vorzugsweise in Form eines O-Rings mit einer profilierten Oberfläche.

## Claims

1. Flange connection on a building structure in the form of an offshore or onshore structure, comprising a first, lower connection profile (1a) and a second, upper connection profile (1b), which is connected to the first, lower connection profile (1a), wherein the first, lower connection profile (1a) with a cylindrical, continuous profile cross section and with at least one end-side, encircling flange, wherein the flange has a flange body (5, 5a, 5b) with a supporting surface (7) for supporting a mating surface of a complementary connection profile (1b), and the supporting surface (7) has through-passage openings (6) for fastening means, said openings being spaced apart from one another on an arc of a circle, passing through it, and the flange body (5) extends essentially at right angles to the longitudinal axis of the continuous profile cross section, wherein the flange body (5, 5a, 5b) is formed on either side of the wall (2) of the continuous profile cross section, wherein an inwardly protruding part of the flange body is designed to protrude further than an outwardly protruding part of the flange body, and wherein the inwardly oriented part of the flange body has through-passage openings (6), which are arranged in a common circle pattern of holes, passing through it, **characterized in that** the second, upper connection profile (1b) is designed in the form of a connection profile with an internally encircling annular flange (13), which is configured in the form of a normal annular flange with an L-shaped profile.

2. Flange connection according to Claim 1, **characterized in that** the flange has a skirt (11), which peripherally surrounds the supporting surface (7) and projects in the direction of the complementary connection profile (1b).

3. Flange connection according to either of Claims 1 and 2, **characterized in that** the supporting surface (7) is profiled.

4. Flange connection according to one of Claims 1 to 3, **characterized in that** the supporting surface (7) contains at least one encircling depression in which to engage a pile driver.

5. Flange connection according to one of Claims 2 to 4, **characterized in that** the skirt (11) is connected to the flange body (5) in one piece by way of an outwardly protruding part (5b) of the flange body (5), and **in that** the through-passage openings (6) pass through an inwardly protruding part (5a) of the flange body (5).

6. Flange connection according to Claim 5, **characterized in that** the skirt (11) circumferentially covers a butt joint (15) between a supporting surface (7) of the second, upper connection profile (1b) and the supporting surface of the first, lower connection profile (1a) and, with the second, upper connection profile (1b), forms an annular space (18).

7. Flange connection according to Claim 6, **characterized in that** the annular space (18) is covered from the outside by means of a sealing sleeve (16).

8. Flange connection according to Claim 7, **characterized in that** the sealing sleeve (16) comprises at least one preferably flexible moulding, which at least partially fills the annular space (18).

9. Flange connection according to Claim 7, **characterized in that** the annular space (18) accommodates at least one flexible moulding or flexible sealing element.

10. Method for erecting a building structure using a flange connection according to one of Claims 1 to 9, **characterized in that** the first, lower connection profile (1a) is rammed and/or vibrated into the surface underlying the structure.

11. Method according to Claim 10 comprising, in a first step, the operation of vibrating at least the first, lower connection profile (1a) into the surface underlying the structure, as far as a first penetration depth and, in a second step, the operation of ramming the same connection profile directly, or indirectly via at least one flanged-on, further connection profile, into the surface underlying the structure, and also the operation of completing the building structure using further connection profiles or further structural components.

12. Method according to either of Claims 10 and 11 using a connection profile in which the supporting surface (7) contains at least one encircling depression in which to engage a pile driver, **characterized in that** an elastic sealing means, preferably in the form of an O ring with a profiled surface, is introduced into the encircling depression of the supporting surface prior to the ramming operation.

## Revendications

1. Raccord à bride au niveau d'une structure de construction en tant que structure offshore ou terrestre, comprenant un premier profilé de raccordement inférieur (1a) et un deuxième profilé de raccordement supérieur (1b) raccordé au premier profilé de raccordement inférieur (1a), le premier profilé de raccordement inférieur (1a) avec une section transversale de profilé cylindrique continue et avec au moins une bride périphérique disposée du côté de l'extrémité, la bride présentant un corps de bride (5, 5a, 5b) avec une surface de support (7) pour supporter une surface conjuguée d'un profilé de raccordement (1b) réalisé de manière complémentaire et la surface de support (7) étant traversée par des ouvertures d'accès (6) pour des moyens de fixation, disposées à distance les unes des autres sur un arc de cercle, et le corps de bride (5) s'étendant essentiellement à angle droit par rapport à l'axe longitudinal de la section transversale de profilé continue, le corps de bride (5, 5a, 5b) étant réalisé en saillie de part et d'autre de la paroi (2) de la section transversale de profilé continue, une partie saillant vers l'intérieur du corps de bride étant réalisée de manière à faire saillie davantage par rapport à une partie saillant vers l'extérieur du corps de bride et la partie orientée vers l'intérieur du corps de bride étant traversée par les ouvertures d'accès (6) disposées sur un cercle de trous commun, **caractérisé en ce que** le deuxième profilé de raccordement supérieur (1b) est réalisé sous forme de profilé de raccordement avec une bride annulaire périphérique intérieure (13) qui est configurée sous forme de bride annulaire normale avec un profil en forme de L.

2. Raccord à bride selon la revendication 1, **caractérisé en ce que** la bride présente une jupe (11) enserrant du côté du bord la surface de support (7), laquelle fait saillie dans la direction du profilé de raccordement complémentaire (1b).

3. Raccord à bride selon l'une quelconque des revendications 1 ou 2, **caractérisé en ce que** la surface de support (7) est profilée.

4. Raccord à bride selon l'une quelconque des revendications 1 à 3, **caractérisé en ce qu'**au moins un renfoncement périphérique est prévu dans la surface de support (7) pour l'engagement d'un enfonce-pieux.

5. Raccord à bride selon l'une quelconque des revendications 2 à 4, **caractérisé en ce que** la jupe (11) est raccordée d'une seule pièce au corps de bride (5) par une partie saillant vers l'extérieur (5b) du corps de bride (5) et **en ce que** les ouvertures d'accès (6) traversent une partie saillant vers l'intérieur (5a) du corps de bride (5).

6. Raccord à bride selon la revendication 5, **caractérisé en ce que** la jupe (11) recouvre sur toute la périphérie un joint vif (15) entre une surface de support (7) du deuxième profilé de raccordement supérieur (1b) et la surface de support du premier profilé de raccordement inférieur (1a) et forme un espace annulaire (18) avec le deuxième profilé de raccordement supérieur (1b).

7. Raccord à bride selon la revendication 6, **caractérisé en ce que** l'espace annulaire (18) est couvert depuis l'extérieur au moyen d'un manchon d'étanchéité (16).

8. Raccord à bride selon la revendication 7, **caractérisé en ce que** le manchon d'étanchéité (16) comprend au moins une pièce moulée de préférence flexible qui remplit au moins en partie l'espace annulaire (18).

9. Raccord à bride selon la revendication 7, **caractérisé en ce que** l'espace annulaire (18) reçoit au moins une pièce moulée flexible ou un élément d'étanchéité flexible.

10. Procédé de réalisation d'une structure de construction en utilisant un raccord à bride selon l'une quelconque des revendications 1 à 9, **caractérisé en ce que** le premier profilé de raccordement inférieur (1a) est enfoncé par force ou par vibration dans le sol sous la construction.

11. Procédé selon la revendication 10, comprenant, dans une première étape, l'enfoncement par vibration d'au moins le premier profilé de raccordement inférieur (1a) dans le sol sous la construction jusqu'à une première profondeur d'enfoncement, dans une deuxième étape, l'enfoncement par force du même profilé de raccordement directement ou indirectement par le biais d'au moins un profilé de raccordement supplémentaire à bride dans le sol sous la construction et l'achèvement de la structure de construction avec des profilés de raccordement supplémentaires ou avec des composants structurels supplémentaires.

12. Procédé selon l'une quelconque des revendications 10 ou 11, utilisant un profilé de raccordement dans lequel, au moins un renfoncement périphérique pour l'engagement d'un enfonce-pieux est prévu dans la surface de support (7), **caractérisé en ce que** dans le renfoncement périphérique de la surface de support est introduit, avant l'enfoncement par force, un moyen d'étanchéité élastique, de préférence sous la forme d'un joint torique avec une surface profilée.
